# EUROPÄISCHE PATENTSCHRIFT

(11) **EP 2 317 027 B1**
(45) Veröffentlichungstag und Bekanntmachung des Hinweises auf die Patenterteilung: **24.06.2015**
(21) Anmeldenummer: 10186804.0
(22) Anmeldetag: 07.10.2010
(51) Int. Cl.: E04F 11/116, E04F 11/022, A47B 96/20, B32B 7/12, B32B 9/04, E04F 11/104

(54) **Treppenstufe oder Steinkörper und Verfahren zur Herstellung einer Treppenstufe oder eines Steinkörpers**
Tread or stone body and method for manufacturing a tread or a stone body
March d'escalier ou corps en pierre et procédé de fabrication d'une march d'escalier ou d'un corps en pierre

(30) Priorität: 29.10.2009 DE 102009044360; 30.11.2009 DE 102009056076; 06.08.2010 DE 102010036885
(43) Veröffentlichungstag der Anmeldung: 04.05.2011
(73) Patentinhaber: Kattwinkel, Frieder, 42329 Wuppertal (DE)
(72) Erfinder: Kattwinkel, Frieder, 42329 Wuppertal (DE)
(74) Vertreter: Müller, Enno

(56) Entgegenhaltungen:
- EP-A1- 0 019 266
- EP-A2- 1 336 700
- DE-A1- 10 138 894
- DE-U1-202010 003 236

## Beschreibung

Die Erfindung betrifft zunächst eine Treppenstufe oder einen Steinkörper nach den Merkmalen des Oberbegriffes des Anspruches 1.

Im Falle einer Treppenstufe ist eine Fläche als Stufenfläche ausgebildet. Im Falle eines Steinkörpers kann es sich um die Wandung eines Möbels, bspw. einer Möbeltür, insbesondere Schranktür, handeln. Hierbei ist die genannte Fläche ebenfalls eine Außenfläche.

Derartige Steinkörper in Form von Treppenstufen sind in vielfältiger Hinsicht bekannt. Ein weit verbreitetes Anwendungsgebiet für Treppenstufen als solche sind Treppenstufen an freitragenden Treppen, wie sie beispielsweise in Einfamilienhäusern benutzt sind. Die freitragende Treppe kann durch ein Gerüst, beispielsweise ein Stahlgerüst, vorgegeben sein, auf dem dann die Treppenstufen durch Verschrauben befestigt sind. Oftmals handelt es sich um reine Holzstufen. Es besteht jedoch auch ein Bedürfnis, derartige Stufen mit einer Stein-Stufenfläche auszubilden. Aus Stein bestehende Treppenstufen sind jedoch nicht in der gewünschten Weise einfach montierbar.

Es sind auch bereits Möbel aus Stein, auch aus Natursteinplatten, vorgeschlagen worden. Sie sind jedoch einerseits vergleichsweise schwer und andererseits auch hinsichtlich des Zusammenbaus schwierig zu handhaben.

Aus der EP-A1-19266 ist ein Steinkörper bekannt, der als durch Steinplatten gebildeter geschlossener Steinkörper gestaltet ist. Er ist nicht in einfacher Weise schraubbefestigbar.

Aus der DE-A1-10138894 ist in gleicher Weise ein vollständig geschlossener Steinkörper bekannt, der innenseitig eine aus Styropor hergestellte Leichtstoffschicht aufweist. Eine Schraubbefestigung ist nicht möglich.

Ausgehend von dem genannten Stand der Technik beschäftigt sich die Erfindung mit der Aufgabe, eine Treppenstufe oder einen Steinkörper bzw. ein Verfahren zur Herstellung solcher Teile anzugeben, bei welchen Teilen unter Einsatz eines Steinmaterials ein einfach montierbarer, bspw. ohne Weiteres verschraubbarer Steinkörper gegeben ist bzw. sich vorteilhaft herstellen lässt.

Diese Aufgabe ist beim Gegenstand des Anspruches 1 bzw. des Anspruches 10 gelöst.

Hierbei ist gegenständlich darauf abgestellt, dass der Steinkörper als einseitig offen ausgebildeter schalenartiger Steinkörper gebildet ist, dass eine Unterseite des Körpers bzw. Stufenkörpers zur Schraubbefestigung zugänglich ist, dass der Körper bzw. Stufenkörper unterseitig von einem in einfacher Weise durchbohrbaren Abdeckteil überdeckt ist, dass das Abdeckteil größenmäßig so vorgesehen ist, dass es bis in Überdeckung zu einer nach unten weisenden Stirnfläche des schalenartigen Steinkörpers ragt und dass die Stein-Plattenteile innenseitig mit einem Gewebe beschichtet sind.

Verfahrensmäßig ist darauf abgestellt, dass die Stein-Plattenteile innenseitig mit einem Gewebe beschichtet werden, dass zur Bildung der Außenfläche bzw. der Stufenfläche ein einseitig offen ausgebildeter Steinkörper ausgebildet wird, der einen Schalenrand aufweist, dass ein schraubverbindbarer Körper, im Falle einer Treppenstufe ein schraubverbindbarer Stufenkörper, mit einem randseitig überstehenden, in einfacher Weise durchbohrbaren Abdeckteil ausgebildet wird und dass der Körper, im Falle einer Treppenstufe der Stufenkörper, unter Zwischenlage einer Klebstoffschicht derart in den schalenartigen Steinkörper eingebracht wird, dass das Abdeckteil auf dem Schalenrand zur Anlage kommt.

Dadurch, dass eine schalenartige, einseitig offene Überdeckung des Körpers bzw. Stufenkörpers vorgesehen ist, sind auch zugleich eine oder mehrere Stirnflächen des Steinkörpers als Steinflächen gestaltet. Der aus mehreren Steinteilen zusammengesetzte Steinkörper umfängt entsprechend den Körper bzw. Stufenkörper. Eine oder mehrere, insbesondere alle so gebildeten Stein-Stirnflächen verlaufen bevorzugt rechtwinkelig zu der Fläche, die eine Außenfläche ist, im Falle einer Treppenstufe die Stufenfläche. Der so gebildete Steinkörper vermittelt den Eindruck eines massiven Steinkörpers. Tatsächlich ist er jedoch wegen der möglichen sehr dünnen Gestaltung des Schalenkörpers und des hinsichtlich seines Gewichtes vorteilhaft auswählbaren im Inneren des Schalenkörpers angeordneten Füllkörpers als vergleichsweise leichtes Teil herstellbar, das zudem zufolge des rückseitig zugänglichen Körpers auch vorteilhaft montierbar ist.

Verfahrensmäßig wird zunächst der Steinkörper, nach innenseitiger Beschichtung der Stein-Plattenteile mit einem Gewebe, gemäß Anspruch 10 ausgebildet, welcher Steinkörper einen Schalenrand aufweist, wobei der schraubverbindbare Körper, im Falle einer Treppenstufe der schraubverbindbare Stufenkörper, mit einem randseitig überstehenden, in einfacher Weise durchbohrbaren Abdeckteil ausgebildet wird und der Körper, im Falle der Treppenstufe der Stufenkörper, unter Zwischenlage einer Klebstoffschicht derart in den schalenartigen Steinkörper eingebracht wird, dass das Abdeckteil auf dem Schalenrand zur Anlage kommt. Unter einer schalenartigen Ausbildung ist bspw. ein winkelartiger Aufbau des Steinkörpers zu verstehen. Wenn der Körper bzw. Stufenkörper aus Holz besteht, lässt sich hierdurch ein schraubverbindbarer Steinkörper, etwa in Form einer Treppenstufe oder eines Möbelteils, in einfacher Weise herstellen, der jedoch das Aussehen und die Widerstandsfähigkeit eines massiven Steinkörpers, bspw. einer Stein-Treppenstufe, aufweist.

Die Erfindung ist zunächst anhand eines als Treppenstufe ausgebildeten Steinkörpers beschrieben, wobei der von dem schalenartigen Steinkörper überdeckte Körper als Stufenkörper angesprochen ist. Die insofern beschriebenen Merkmale sind aber auch unmittelbar bei einem als beispielsweise Möbelteil ausgebildeten derartigen Steinkörper gegeben, wobei der Stufenkörper auch als Kernkörper angesprochen sein kann.

So ist es bevorzugt, dass der Stufenkörper quaderförmig ist. Im Einzelnen können derartige Stufen sehr unterschiedliche Gestalt haben. Auch im Verlauf einer Treppe selbst. Es ist beispielsweise bekannt, dass Eckenbereiche einer Treppe durch eine weiter ausladende Stufe, die auch mehrere im Winkel zueinander verlaufende Stirnflächen aufweisen kann, gebildet sein können. Bei einer üblichen quaderförmigen Treppenstufe, zu der auch geeigneterweise der Stufenkörper dann quaderförmig gestaltet ist, weist der Stufenkörper einen rechteckigen Grundriss mit zwei Langseiten und zwei Schmalseiten auf.

Das den Stufenkörper unterseitig abdeckende Abdeckteil kann bspw. als dünnes Plattenteil, mit einer Dicke im Bereich von 0,3 bis 10 mm, vorzugsweise im Bereich von 0,5 bis 1,5 mm, gestaltet sein. Es kann eine gewünschte einheitliche unterseitige Oberfläche geschaffen werden. Das Abdeckteil ist auch bevorzugt größenmäßig so vorgesehen, dass es bis in Überdeckung zu einer nach unten weisenden Stirnfläche des Steinkörpers reicht. Ein Klebespalt zwischen einer Innenseite des Steinkörpers und einer Außenseite des Stufenkörpers ist somit auch von diesem Plattenteil dann mit überdeckt. Und dies bevorzugt auf dem ganzen Umfang. Das Abdeckteil ist derart ausgebildet, dass es in einfacher Weise durchbohrbar ist. Die Zugänglichkeit des Stufenkörpers zur Schraubbefestigung ist durch das Abdeckteil nicht beeinflusst. Zur Ausbildung des Abdeckteils bietet sich eine, gegebenenfalls - vorzugsweise außenseitig - oberflächenbeschichtete dünne Holzplatte an. Es kann sich aber auch um eine Kunststoffplatte handeln. Etwa aus einem Hartkunststoff wie PP oder PE.

Das Abdeckteil ist weiter bevorzugt ebenfalls mit dem Stufenkörper, bevorzugt nur an seiner Unterseite, klebeverbunden. Weiter bevorzugt wird auch diese Klebeverbindung zwischen dem Stufenkörper und dem Plattenteil zunächst vorgenommen, bevor die Zusammenfügung mit dem schalenartigen Steinkörper vorgenommen wird. In diesem Zwischenschritt ergibt sich hinsichtlich des mit dem Abdeckteil verbundenen Stufenkörpers entsprechend ein hutförmiges Profil.

Der Steinkörper selbst besteht, in seiner schalenartigen Ausbildung, aus einer Mehrzahl von Stein-Plattenteilen. Die einzelnen Stein-Plattenteile sind nur ebenflächig ausgebildet. Sie besitzen eine Dicke im Bereich beispielsweise von 2 bis 10 mm. Sie sind untereinander zur Bildung des Steinkörpers bevorzugt auch lediglich verklebt, bevorzugt mittels eines üblichen Steinklebers. Es ergibt sich ein sehr dünner Klebespalt, von 1 mm oder weniger, beispielsweise 0,1 bis 0,3 mm Dicke. Auch ein solcher Steinkleber kann ein Zwei-Komponenten-Klebstoff sein. Beispielsweise auf Epoxydharzbasis. Die Stein-Plattenteile sind einseitig, der späteren Innenseite, zur Erhöhung ihrer Stabilität beschichtet. Die Beschichtung kann durch ein, gegebenenfalls grobmaschiges, Gewebe, beispielsweise ein Glasfasergewebe, gegeben sein. Die Beschichtung ist mit der betreffenden Seite des Stein-Plattenteils fest verklebt. Die Beschichtung ist auf dieser Seite des Stein-Plattenteils bevorzugt ganzflächig vorgesehen.

In weiterer Einzelheit ist bevorzugt, dass die Stein-Plattenteile an ihren miteinander verbundenen Randkanten gehrungsartig verlaufen. Sie können hierzu beispielsweise gehrungsartig geschliffen sein. Die Gehrungs-Innenflächen sind dann bevorzugt miteinander verklebt.

Der Stufenkörper selbst ist mit dem Steinkörper bevorzugt mittels eines Ein- oder Zwei-Komponenten-Klebstoffes, weiter bevorzugt mittels eines aufschäumenden Klebstoffes, insbesondere eines aufschäumenden Zwei-Komponenten-Klebstoffes, dies auch bevorzugt unter Ausbildung eines Klebespaltes von relativ großer Dicke, verklebt. Der Klebstoff kann beispielsweise Polyurethan-basiert sein. Insbesondere im Vergleich zu dem Klebespalt zwischen den Stein-Plattenteilen und/oder zwischen dem Stufenkörper und dem Abdeckteil ist der verbleibende Klebespalt zwischen dem Steinkörper und dem Stufenkörper mehrfach größer. Der Klebespalt zwischen dem Stufenkörper und dem Steinkörper kann eine Spaltbreite im Bereich von 1 bis 5 mm oder mehr aufweisen.

Weiter bevorzugt liegt der Stufenkörper insgesamt nicht an dem Steinkörper an. Nur das mit dem Stufenkörper verbundene Abdeckteil. Wenn das Abdeckteil, wie jedenfalls grundsätzlich möglich, integral mit dem Stufenkörper ausgebildet ist, liegt insoweit - in diesem Bereich, bezogen auf das bereits angesprochene Hutprofil - dann also im Bereich des Hutrandes, der Stufenkörper an dem Steinkörper an.

Eine weitere bevorzugte Ausführungsform sieht vor, dass der Stufenkörper mit dem Steinkörper unter Zwischenlage eines Metallteils verklebt ist. Dies ermöglicht es, an gegebenenfalls besonders beanspruchten Bereichen des Steinkörpers, innenseitig, hierdurch eine Verstärkung zu erreichen. Entsprechend ist insbesondere vorgesehen, dass die Zwischenlage des Metallteils nur bereichsweise ausgebildet ist.

Das Metallteil ist weiter bevorzugt entlang der Innenseite einer Eckausbildung des Steinkörpers angeordnet. Diesbezüglich bevorzugt weiter so, dass das bevorzugt integral ausgebildete Metallteil an beiden Seiten der Ecklinie, d. h. beispielsweise auch, wenn der Steinkörper, wie bevorzugt vorgesehen, so ausgebildet ist, an zwei unterschiedlichen Stein-Plattenteilen des Steinkörpers anliegt.

Insbesondere bei einer im Grundriss rechteckigen Stufenausbildung, wie dies üblicherweise der Fall ist, ist auch bevorzugt, das Metallteil nur entlang der Innen-Längsecken des Steinkörpers, diesbezüglich auch gegebenenfalls nur abschnittsweise, vorzusehen.

Das Metallteil kann insbesondere auch ein Hohlprofil sein. Beispielsweise ein Vierkantrohr. Diesbezüglich ist weiter bevorzugt, dass das Metallteil einen quadratischen Querschnitt aufweist. Die Wandstärke des Metallteils kann beispielsweise zwischen 0,5 und 5 mm liegen, wobei auch diesbezüglich alle Zwischenwerte, insbesondere in 0,1 mm-Schritten, in die Offenbarung eingeschlossen sind. Hinsichtlich des Metalls ist insbesondere Aluminium bevorzugt. Es ist aber beispielsweise auch ein Edelstahlteil verwendbar.

Das Metallteil seinerseits ist weiter bevorzugt an seinen dem Steinkörper zugewandten Flächen mit diesem klebeverbunden. Hierbei mittels eines möglichst hart aushärtenden Klebstoffs und weiter bevorzugt unter Bildung einer dünnen Klebeschicht. "Dünn" bedeutet hier beispielsweise eine Dicke zwischen 0,1 und 2 mm, wobei auch diesbezüglich alle Zwischenwerte, insbesondere in 0,01 mm-Schritten, in die Offenbarung einbezogen sind. Entsprechend ist für diese Verklebung ein nicht aufschäumender Klebstoff und/oder ein einkomponentiger Klebstoff, weiter bevorzugt auf Polyurethanbasis, bevorzugt.

Mit dem Stufenkörper ist das Metallteil dann in an sich schon beschriebener Weise mittels des bevorzugt aufschäumenden Klebstoffs verbunden. Auch bezüglich dieser Ausführungsform ist bevorzugt, dass der Stufenkörper nur mittels der Klebstoffschicht mit dem Steinkörper bzw. dem Metallteil, also bevorzugt nur vermittels der aufschäumenden Klebschicht, verbunden ist.

Die Steinplattenteile weisen innenseitig bevorzugt die genannte Gewebeauflage, insbesondere eine Glasfasergewebe-Auflage, auf. Diese ist ihrerseits bereits mit dem Steinkörper verklebt. Das Metallteil ist also unter enger Anpressung an die Gewebelage entsprechend mit dem Steinkörper durch den genannten Klebstoff bevorzugt verklebt.

Hinsichtlich der Herstellung ist es bevorzugt, dass der zunächst mit dem Abdeckteil klebeverbundene Stufenkörper gleichsam in den Steinkörper eingehängt wird. Hierzu ist es ersichtlich vorteilhaft, wenn der Steinkörper an mindestens zwei gegenüberliegenden Seiten einen gleich hohen Randverlauf aufweist, der zur Einhänge-Abstützung dient. Aufgrund des weiter bevorzugt bereits erwähnten aufschäumenden Klebers, der zwischen dem Steinkörper und dem Stufenkörper zur Anwendung kommt, ist es aber oftmals angezeigt, nicht ein einfaches Einhängen vorzunehmen, sondern ein diesbezügliches Einschieben und druckbelastetes Halten des eingeschobenen Verbundes aus Stufenkörper und Abdeckteil in dem schalenartigen Steinkörper, bis eine Aushärtung des Klebstoffes in dem Klebspalt zwischen dem Steinkörper und dem Stufenkörper erfolgt ist. Der Stufenkörper ist bevorzugt nach dem Einhängen hinsichtlich seiner gesamten eingehängten Oberfläche beabstandet von dem Steinkörper bzw. gegebenenfalls dem oder den Metallteilen. Nur das Abdeckteil bzw. das Metallteil liegt, abgesehen von der gegebenenfalls vorhandenen dünnen Klebeschicht, auf dem Steinkörper auf. Der durch die Beabstandung gegebene Beabstandungsraum ist ganz oder zumindest teilweise durch den - bevorzugt aufgeschäumten - Klebstoff gefüllt.

Bezüglich der weiteren Ausführungsform, bei welcher innenseitig ein oder mehrere Metallteile vorgesehen sind, ist darüber hinaus bevorzugt, dass zunächst die Metallteile innenseitig mit dem Steinkörper verklebt werden und erst danach die Verklebung des Stufenteils mit dem so ergänzten Steinkörper erfolgt.

Hinsichtlich des Steinkörpers, gegebenenfalls ergänzt um die genannten Metallteile, der entsprechend auch zunächst bezüglich der Verklebung der Steinplatten untereinander hergestellt wird, ergibt sich gleichsam ein einseitig offener Kasten. Die Kastenwände sind bevorzugt umlaufend geschlossen ausgebildet.

Weiter bevorzugt wird das Abdeckteil mit einem solchen seitlichen Überstand über den Stufenkörper zunächst vorgesehen, dass sich auch hinsichtlich der Stirnflächen des Steinkörpers zunächst ein Überstand ergibt. Nach erfolgtem Aushärten des Klebstoffes wird dann bevorzugt ein überstehender Rand des Abdeckteils entfernt. Er kann beispielsweise abgeschliffen werden.

Hinsichtlich des Stufenkörpers ist es bevorzugt, dass dieser für sich gesehen eine größere Dicke aufweist als der Steinkörper.

Der Stufenkörper kann ein Holzkörper sein. Beispielsweise ein Schichtholzkörper.

Hinsichtlich des Steinkörpers ist weiter bevorzugt, dass dieser aus Naturstein-Plattenteilen zusammengesetzt ist. Eine typische Gesamtdicke einer solchen Treppenstufe liegt zwischen 30 und 60 mm, bevorzugt bei 40 mm. Hiervon entfällt auf ein (oberes) Stein-Plattenteil ein Anteil von bevorzugt 5 bis 10 mm, also 1/5 bis 1/4 der Gesamtdicke. Der Klebespalt zwischen dem (oberen) Stein-Plattenteil und dem Stufenkörper nimmt etwa 1 bis 5 mm hiervon ein.

Der Steinkörper kann im Weiteren auch als Möbelbauplatte, insbesondere in Form einer Schranktür oder Schrankseitenwand ausgebildet sein. Es kann sich aber auch um eine Tischplatte beispielsweise handeln. Auch insofern ist von Bedeutung, dass zunächst ein schalenartiger Steinkörper gebildet wird und dass in der Schalenöffnung dieses Steinkörpers ein später zum Schraubbefestigen oder dgl. geeigneter Kern-Körper angeordnet wird und dessen Unterseite zur Durchführung einer Befestigung zugänglich bleibt.

Im Zuge der Ausbildung beispielsweise als Schranktür können dann Ausfräsungen, etwa in kreisförmiger Form, für bekannte Scharnierteile vorgenommen werden, die dann im Weiteren auch mit dem Kernkörper verschraubt werden, Auch insofern bietet sich für den Kernkörper die Ausgestaltung als Holzkörper an. Beispielsweise ist hier eine Stäbchen-Tischlerplatte bevorzugt.

Weiter ist auch in diese Ausgestaltung bevorzugt, dass der Kernkörper unterseitig von einem Abdeckteil überdeckt ist und das Abdeckteil dann auch bis auf die Stirnflächen bildenden Schalungsränder des Steinkörpers überragend gebildet ist. Darüber hinaus ist der Kernkörper bevorzugt auch in dieser Ausgestaltung mittels eines Zwei-Komponenten-Klebstoffs, bevorzugt aufschäumenden Zwei-Komponenten-Klebstoffs, verklebt.

Bei einem derartigen Möbelteil ist es im Allgemeinen nicht erforderlich, die auch vorstehend schon beschriebenen Metallteile zur Verstärkung anzuordnen. Andererseits ist dies aber auch grundsätzlich möglich.

Nachstehend ist die Erfindung weiter anhand der beigefügten Zeichnung, die jedoch lediglich sich auf Ausführungsbeispiele bezieht, erläutert. Hierbei zeigt:
- Fig. 1: eine schematische Seitenansicht einer Treppe mit Treppenstufen;
- Fig. 2: einen Querschnitt durch eine Treppenstufe;
- Fig. 3: eine perspektivische Ansicht eines Steinkörpers, wie er zur Herstellung der Treppenstufe Verwendung findet;
- Fig. 4: eine perspektivische Ansicht eines Stufenkörpers mit Abdeckteil vor dem Zusammenfügen mit dem Steinkörper;
- Fig. 5: eine perspektivische Explosionsdarstellung des Stufenkörpers mit Abdeckplatte vor Einsetzen in den mit Klebstoff versehenen Steinkörper;.
- Fig. 6: eine Darstellung gemäß Fig. 2 einer weiteren Ausführungsform;
- Fig. 7: eine schematische, perspektivische Ansicht eines Schrankes mit einer Mehrzahl von Türen;
- Fig. 8: einen Querschnitt durch eine der Schranktüren gemäß Fig. 7, geschnitten entlang der Linie VIII-VIII.

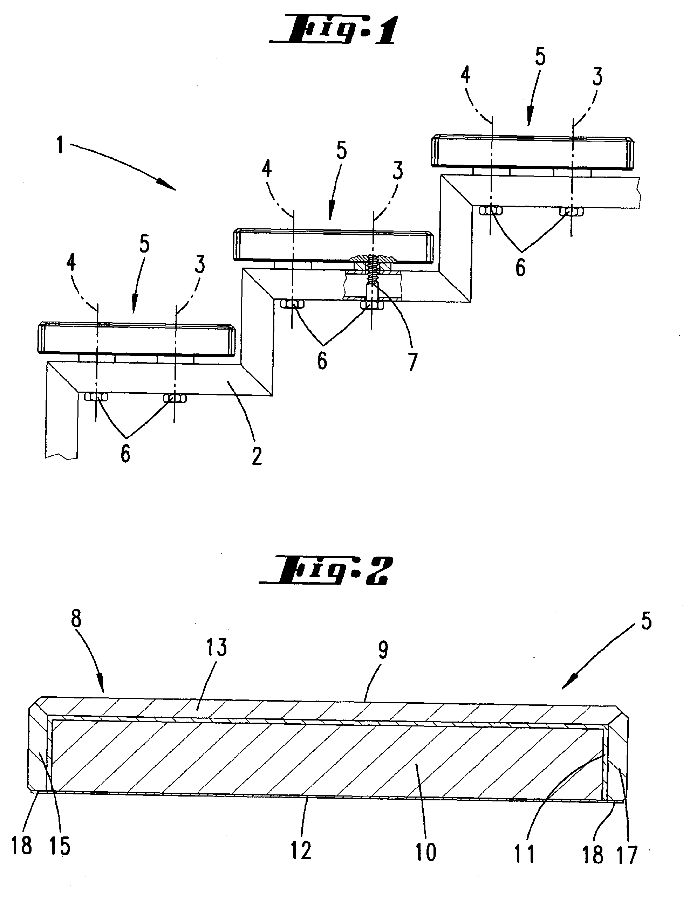

Dargestellt und beschrieben ist zunächst mit Bezug zu Fig. 1 in schematischer Seitendarstellung eine Treppe 1, die beim Ausführungsbeispiel ein Stahlgestell 2 aufweist. Auf dem Stahlgestell 2 sind mittels hier nur schematisch angedeuteter Schrauben 3, 4 Treppenstufen 5 schraubverbunden. Die Schrauben weisen Schraubköpfe 6 auf und einen Holz-Schraubschaft 7, der einerseits eine entsprechende Bohrung in dem Gestell 2 durchsetzt und andererseits in die Treppenstufe 5, insbesondere in einen als Holzkörper gebildeten Stufenkörper 10 der Treppenstufe 5, eingeschraubt ist.

Fig. 2 zeigt einen Querschnitt durch eine hier beschriebene Treppenstufe. Die Treppenstufe 5 weist eine durch einen Steinkörper 8 gebildete Stufenfläche 9 auf. Innerhalb des Steinkörpers 8 ist ein Stufenkörper 10 aufgenommen, der mittels eines geschäumten Klebstoffes 11 mit dem Steinkörper 8 verbunden ist. Unterseitig, d. h. gegenüberliegend beim Ausführungsbeispiel zu der Stufenfläche 9, ist der Stufenkörper 10 mit einem Abdeckteil 12 versehen.

Grundsätzlich kann der Stufenkörper 10 integral mit einem unteren Übergreifrand ausgebildet sein, so dass sich von daher schon die Geometrie der dargestellten Zusammensetzung des Abdeckteils 12 mit dem Stufenkörper 10 ergibt. Bevorzugt ist jedoch, und beim Ausführungsbeispiel vorgesehen, dass das Abdeckteil 12 ein gesondertes Teil ist, beispielsweise eine dünne Holzplatte oder eine dünne Kunststoffplatte. "Dünn" meint hier eine Dicke von 0,1 bis 3 mm, wobei auch alle Zwischenwerte, insbesondere in 0,1 mm-Schritten, in die Offenbarung mit einbezogen sind.

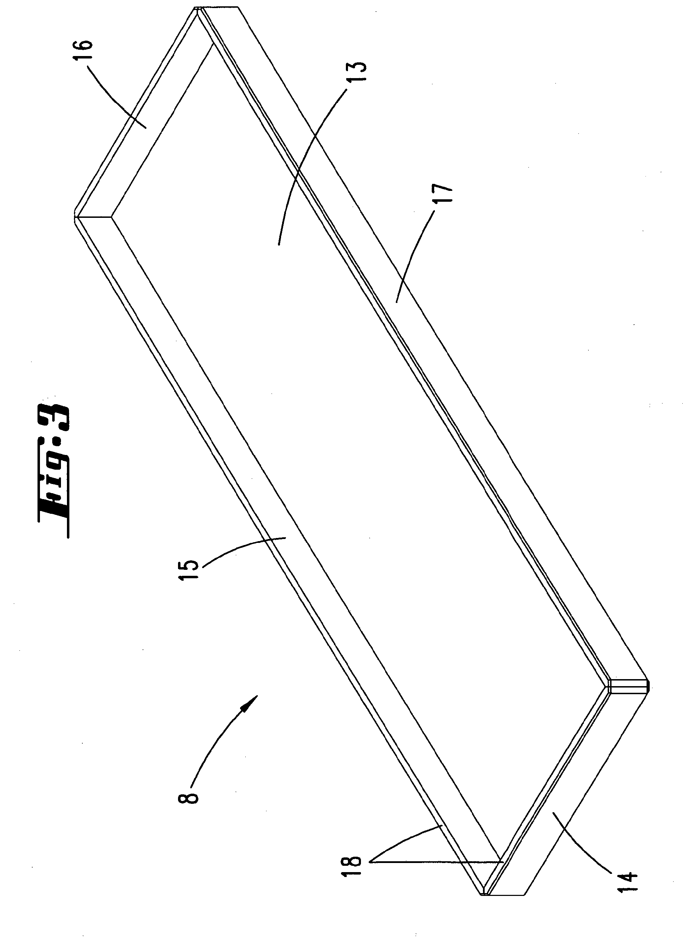

Der Steinkörper 8 setzt sich im Einzelnen aus einer Mehrzahl von Steinplatten 13, 14, 15, 16 und 17 zusammen, vgl. Fig. 3. Die Steinplatten 14 bis 17 bilden hierbei umlaufend geschlossene Wände, wobei insgesamt eine Kastenform, einschließlich auch der die Stufenfläche 9 ausbildenden Steinplatte 13, verwirklicht ist.

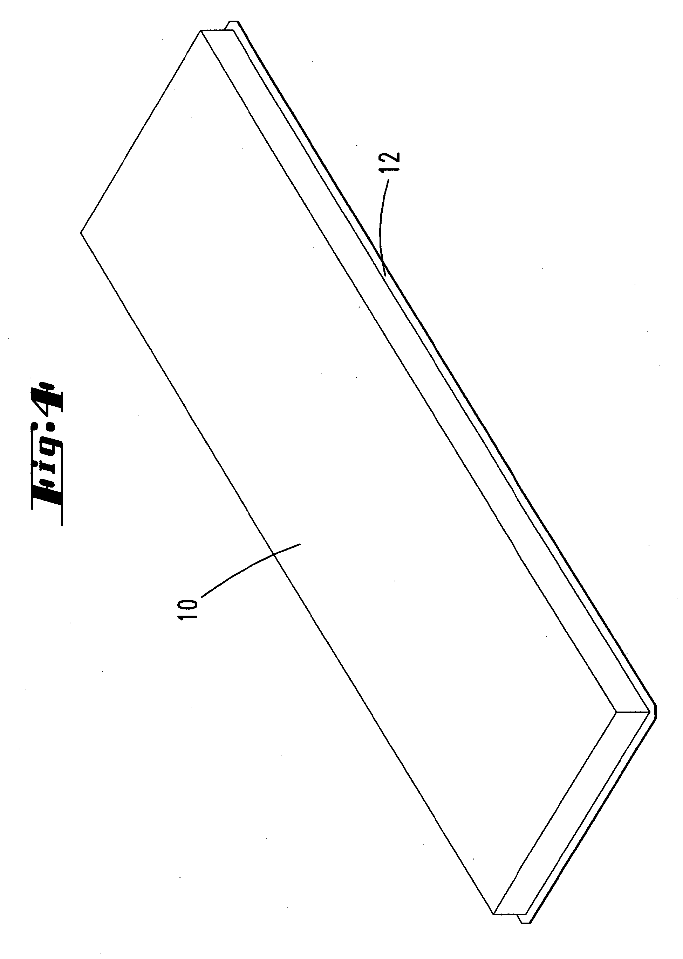

Herstellungsmäßig wird zunächst der Steinkörper 8 gemäß Fig. 3 oder die Verbindung des Stufenkörpers 10 mit dem Abdeckteil 12 gemäß Fig. 4 hergestellt. Sodann das jeweils andere (zusammengesetzte) Teil. Diese diesbezüglichen Einzelteile werden jeweils bevorzugt auch miteinander verklebt. Die Stein-Plattenteile mittels eines Steinklebers und die Verklebung des Stufenkörpers 10 mit dem Abdeckteil 12 wird beispielsweise mittels eines üblichen Holzklebers durchgeführt. Die diesbezüglichen Klebeschichten weisen eine Dicke im Zehntel-Millimeter-Bereich, also bevorzugt zwischen 0,1 und 1 mm, auf, wobei auch alle Zwischenwerte, insbesondere in 0,1 mm-Schritten, in die Offenbarung mit einbezogen sind.

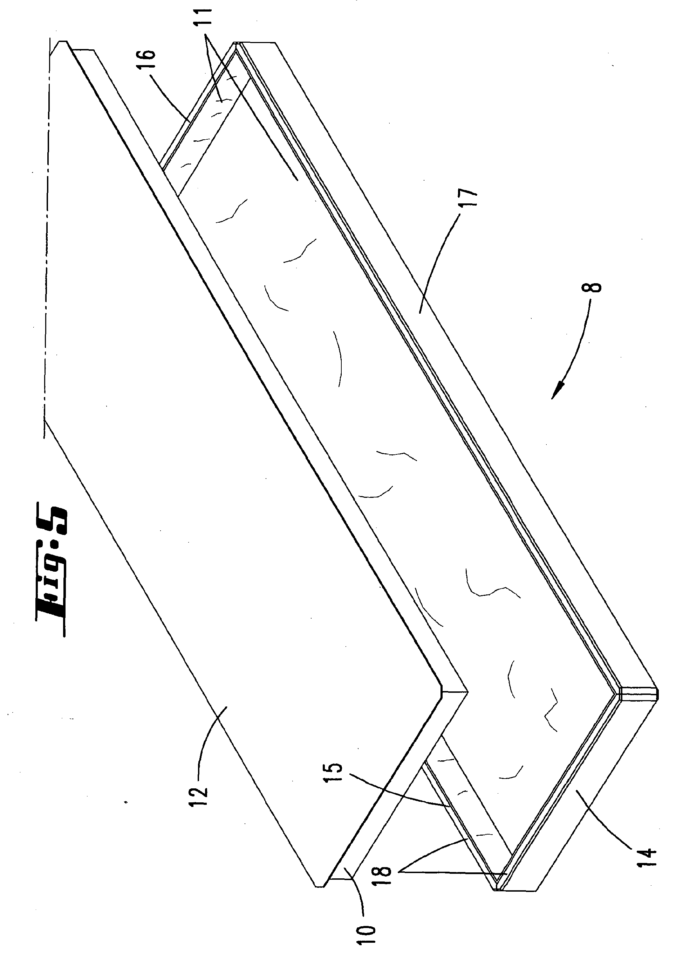

Sodann wird der Steinkörper, wie aus Fig. 5 ersichtlich, innenseitig, bevorzugt hinsichtlich seiner Innenfläche vollständig, in schäumender Form mit einem Klebstoff, der ein Ein- oder bevorzugt Zwei-Komponenten-Klebstoff ist, versehen. Sodann wird der Verbund aus dem Stufenkörper 10 mit dem Abdeckteil 12 in den so mit Klebstoff ausgerüsteten Steinkörper 8 eingesetzt und es ergibt sich der Verbund, wie ein Querschnitt in Fig. 2 dargestellt ist. Lediglich zusätzlich mit einem noch vorhandenen Überstand des Abdeckteils 12. Bis zum Aushärten des Klebstoffes erfolgt eine Verpressung der Teile gegeneinander. Ein übermäßiges Einsinken des Stufenkörpers 10 in den, hierbei auch quaderförmig gebildeten, Hohlraum des Steinkörpers 8 ist dabei durch die Auflage des randseitig überstehend vorgesehenen Abdeckteils 12, überstehend über dem Stufenkörper 10, gegen eine Stirnfläche 18 des Steinkörpers verhindert. Hierdurch ist auch sichergestellt, dass sich auch zwischen der Innenfläche des die Stufenfläche 9 ausbildenden Steinplattenteils 13 und der zugeordneten Oberfläche des Stufenkörpers 10 ein entsprechender mit Klebstoff gefüllter Klebespalt ergibt. Die aufgrund des Zwei-Komponenten-Klebstoffes 11 gegebenen Klebespalte sind vergleichsweise groß. Sie bewegen sich im Bereich von 1 bis 20 mm, weiter bevorzugt im Bereich von 2 bis 5 mm, wobei auch hierbei sämtliche Zwischenwerte, insbesondere in 0,5 mm-Schritten, in die Offenbarung einbezogen sind.

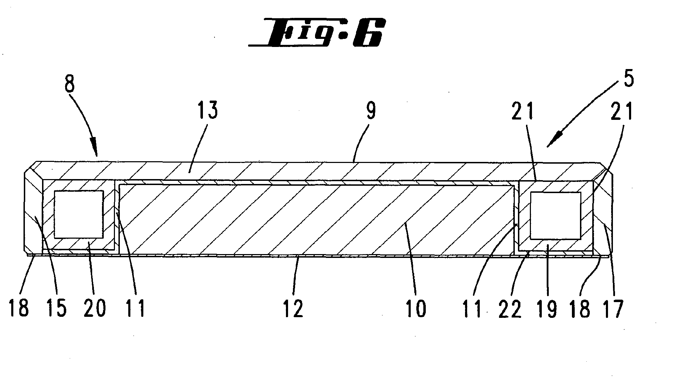

Bei der Ausführungsform der Fig. 6 ist innenseitig des Steinkörpers 8, entlang den Steinplatten 15, 17, die bei dem hier bevorzugten rechteckigen Grundriss einer Treppenstufe 5 die Längsseiten bilden, je ein Metallteil 19, 20, die beim Ausführungsbeispiel Aluminium Vierkantrohre sind, eingeklebt. Die Metallteile 19, 20 sind hierbei zweiseitig, zugeordnet dem Plattenteil 13 bzw. dem Plattenteil 17 oder 15 mit einem von dem geschäumten Klebstoff 11 unterschiedlichen Klebstoff 21 verklebt. Es handelt sich hier bevorzugt um einen einkomponentigen, nicht aufschäumenden, PU-basierten Klebstoff. Die Klebeschicht 21 ist auch möglichst dünn gehalten.

Zwischen dem Stufenkörper 10 und dem Metallteil 19 bzw. 20 ist auch hierbei die genannte aufschäumende Klebstoffschicht 11 ausgebildet. Hinsichtlich der Dicke dieser Klebeschicht wird auf die vorstehende Beschreibung Bezug genommen.

Auch die weiteren Merkmale dieser Ausführungsform entsprechen den vorbeschriebenen Merkmalen.

Auch zwischen dem Abdeckteil 12 und der zugeordneten Unterseite 22 eines Metallteils 19 bzw. 20 ist eine Verklebung bevorzugt mittels desselben die Klebstoffschicht 11 bildenden aufschäumenden Klebers hergestellt. Dies auch bevorzugt in der Dicke die bezüglich dieser Klebstoffschicht 11 bereits beschrieben ist.

Ein Metallteil 19 und/oder 20 separiert bevorzugt den Stufenkörper 10 vollständig von einer Steinplatte 15 und/oder 17. Ein Metallteil 19 und/oder 20 führt weiter bevorzugt den vertikalen Zwischenraum, bezogen auf die Zeichnungsdarstellung der Fig. 6, zwischen der Innenfläche der Steinplatte 13 und dem Abdeckteil 12 praktisch vollständig aus.

Das Abdeckteil 12 kann zur Verklebung mit dem Stufenkörper (10) und den Stirnflächen der Steinplatten 14, 15, 16, 17 vollflächig, gegebenenfalls auch auf einem später abgetrennten Überstand, mit einer Klebstoffschicht (bevorzugt: Holzklebstoff, siehe weiter vorne) versehen sein. Alternativ kann aber auch nur die dem Abdeckteil zugewandte Fläche des Stufenkörpers 10 oder der in Überdeckung mit dem Stufenkörper 10 befindliche Flächenanteil des Abdeckteils 12 mit einem Klebstoff versehen sein, gegebenenfalls noch zusätzlich die genannten Stirnflächen der genannten Steinplatten. Alternativ kann auch die Verklebung des Abdeckteils außerhalb des Stufenkörpers nur vermittels des aufschäumenden Klebstoffes, der die Klebstoffschicht 11 bildet, erreicht sein. Denn dieser Klebstoff hat auch eine ausreichende Klebekraft zur Verbindung mit der Abdeckplatte. Er kann insoweit bis auf die Stirnflächen der genannten Steinplatten übergreifend aufgetragen sein und durch Zusammendrücken lässt sich dann hier auch ein gewünschter dünner Klebstoffspalt erreichen.

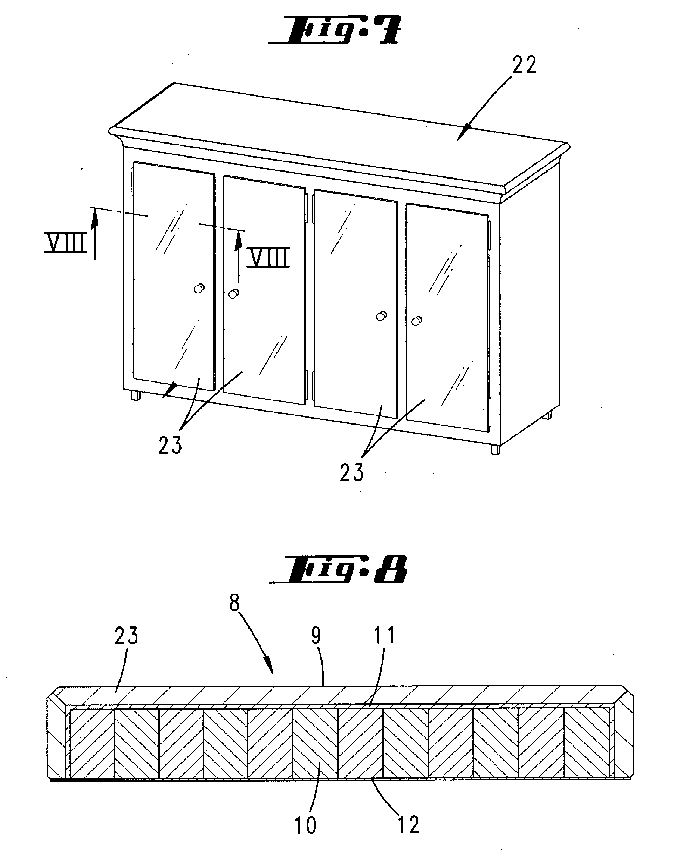

Mit Bezug zu Fig. 7 ist ein Schrank 22 mit einer Mehrzahl von Türen 23 dargestellt. Die Türen weisen eine Natursteinoberfläche auf, gebildet durch eine Natursteinplatte.

Im Hinblick auf die Querschnittsdarstellung gemäß Fig. 8 ist zu erkennen, dass hier auch grundsätzlich eine solche Schranktür 23 in gleicher Weise zusammensetzt, wie hinsichtlich der Treppenstufe 5 zuvor beschrieben. Auch hier bildet der Steinkörper 8 eine Außenfläche 9. Innerhalb des Steinkörpers 8 ist ein hier als Kernkörper zu bezeichnender Körper 10 aufgenommen. Der Körper 10 ist beim Ausführungsbeispiel aus einer Stäbchen-Tischlerplatte gebildet. Hiermit ergibt sich eine vorteilhafte Stabilität unabhängig von Witterungseinflüssen etc.

Der Körper 10 ist mittels eines geschäumten Klebstoffes 11 mit dem Steinkörper 8 verbunden. Unterseitig, d. h. bezogen auf eine Schranktür dem Schrankinneren zugewandt, ist der Körper 10 mit einem Abdeckteil 12 versehen.

Hinsichtlich der Ausgestaltung des Abdeckteils, gegebenenfalls auch in integraler Form mit dem Stufenkörper, wird auch auf vorstehende Ausführungen zu der Treppenstufe 5 verwiesen.

Des Weiteren auch zu der Ausbildung des Steinkörpers 8 im Einzelnen. Er ist in gleicher Weise hier aus einer Mehrzahl von Steinplatten zusammengesetzt.

Die Herstellung ist auch entsprechend der vorstehend zu der Treppenstufe 5 beschriebenen Herstellung möglich. Zunächst wird der Steinkörper 8 in Schalenform aus den diesbezüglichen Einzelteilen erstellt. Weiter wird auch der Körper 10 mit dem Abdeckteil 12 in der beschriebenen Weise verklebt.

Danach wird weiterhin entsprechend wie vorstehend im Zusammenhang mit der Treppenstufe 5 beschrieben, in schäumender Form ein Klebstoff, der ein Ein- oder vorzugsweise Zwei-Komponenten-Klebstoff ist, in den schalenartigen Steinkörper eingebracht und der Körper 10 mit dem Abdeckteil 12 in den so mit Klebstoff ausgerüsteten Steinkörper 8 eingesetzt. Auch die weiteren Herstellungsschritte und Merkmale können wie vorstehend beschrieben durchgeführt bzw. gegeben sein.

## Patentansprüche

1. Treppenstufe oder Steinkörper mit einer Fläche, im Fall einer Treppenstufe einer Stufenfläche (9), und zwei oder mehr sich hieran anschließenden Stirnflächen, wobei ein Körper (10), im Falle einer Treppenstufe ein Stufenkörper (10), außenseitig von einem aus Stein-Plattenteilen bestehenden Steinkörper (8) überdeckt und verklebt ist, **dadurch gekennzeichnet, dass** der Steinkörper (8) als einseitig offen ausgebildeter schalenartiger Steinkörper (8) gebildet ist, dass eine Unterseite des Körpers (10) bzw. Stufenkörpers (10) zur Schraubbefestigung zugänglich ist, dass der Körper (10) bzw. Stufenkörper (10) unterseitig von einem in einfacher Weise durchbohrbaren Abdeckteil (12) überdeckt ist, dass das Abdeckteil (12) größenmäßig so vorgesehen ist, dass es bis in Überdeckung zu einer nach unten weisenden Stirnfläche des schalenartigen Steinkörpers (8) ragt und dass die Stein-Plattenteile innenseitig mit einem Gewebe beschichtet sind.

2. Treppenstufe oder Steinkörper nach Anspruch 1, **dadurch gekennzeichnet, dass** das Abdeckteil (12) als dünne Holz- oder Kunststoffplatte ausgebildet ist.

3. Treppenstufe oder Steinkörper nach einem der Ansprüche 1 oder 2, **dadurch gekennzeichnet, dass** der Körper (10) bzw. Stufenkörper (10) mit dem schalenartigen Steinkörper (8) mittels eines aufschäumenden Zwei-Komponenten-Klebstoffes verklebt ist.

4. Treppenstufe oder Steinkörper nach Anspruch 1, **dadurch gekennzeichnet, dass** der Körper (10) bzw. Stufenkörper (10) quaderförmig ist und/oder dass die Plattenteile (13,14,15,16,17) mittels eines Steinklebstoffs miteinander verklebt sind.

5. Treppenstufe oder Steinkörper nach einem der vorhergehenden Ansprüche, **dadurch gekennzeichnet, dass** der Körper (10) oder Stufenkörper (10) mit dem schalenartigen Steinkörper (8) unter Zwischenschaltung eines Metallteils, beispielsweise eines Metallwinkels oder eines Metall-Hohlprofilteils verklebt ist.

6. Treppenstufe oder Steinkörper nach Anspruch 5, **dadurch gekennzeichnet, dass** die Verklebung entlang der Innenseite einer Eckausbildung des schalenartigen Steinkörpers vorgenommen ist.

7. Treppenstufe oder Steinkörper nach Anspruch 5 oder 6, **dadurch gekennzeichnet, dass** das Metallteil sich entlang eines Längs-Eckbereiches erstreckt.

8. Treppenstufe oder Steinkörper nach einem der Ansprüche 5 bis 7, **dadurch gekennzeichnet, dass** das Metallteil mit dem schalenartigen Steinkörper (8) mittels eines vorzugsweise nicht aufschäumenden, insbesondere einkomponentigen Klebstoffs verklebt ist.

9. Steinkörper nach einem der vorhergehenden Ansprüche, **dadurch gekennzeichnet, dass** der Steinkörper als Möbelteil, insbesondere Möbel-Türteil, vorzugsweise Schrank-Türteil, ausgebildet ist.

10. Verfahren zur Herstellung einer schraubbefestigbaren Treppenstufe oder eines schraubbefestigbaren Steinkörpers mit einem Körper (10), im Falle einer Treppenstufe einem Stufenkörper (10), und einer Außenfläche (9), im Falle einer Treppenstufe einer Stufenfläche (9), und zwei oder mehr sich hieran anschließenden Stirnflächen, wobei der Körper (10), im Falle einer Treppenstufe der Stufenkörper (10), außenseitig von einem aus Stein-Plattenteilen bestehenden Steinkörper (8) überdeckt ist, **dadurch gekennzeichnet, dass** die Stein-Plattenteile innenseitig mit einem Gewebe beschichtet werden, dass zur Bildung der Außenfläche (9) bzw. der Stufenfläche (9) ein einseitig offen ausgebildeter Steinkörper (8) ausgebildet wird, der einen Schalenrand aufweist, dass ein schraubverbindbarer Körper (10), im Falle einer Treppenstufe ein schraubverbindbarer Stufenkörper (10), mit einem randseitig überstehenden, in einfacher Weise durchbohrbaren Abdeckteil (12) ausgebildet wird und dass der Körper (10), im Falle einer Treppenstufe der Stufenkörper (10), unter Zwischenlage einer Klebstoffschicht derart in den schalenartigen Steinkörper (8) eingebracht wird, dass das Abdeckteil (12) auf dem Schalenrand zur Auflage kommt.

11. Verfahren nach Anspruch 10, **dadurch gekennzeichnet, dass** der schalenartige Steinkörper (8) und der eingesetzte Körper (10), im Falle einer Treppenstufe der eingesetzte Stufenkörper (10), bis zum Aushärten der Klebstoffschicht gegeneinander verpresst werden.

12. Verfahren nach Anspruch 10 oder 11, **dadurch gekennzeichnet, dass** nach dem Zusammenfügen des Steinkörpers mit dem Körper (10) bzw. Stufenkörper (10) ein überstehender Rand des Abdeckteils (12) entfernt wird.

13. Verfahren nach einem der Ansprüche 10 bis 12, **dadurch gekennzeichnet, dass** die Stein-Plattenteile zur Bildung des schalenartigen Steinkörpers (8) miteinander klebverbunden werden, wobei, unter Bildung eines einseitig offenen Kastens, die Kastenwände umlaufend geschlossen ausgebildet werden, und, darüber hinaus bevorzugt, die Klebeschicht durch einen Zwei-Komponenten-Kleber gebildet wird, und/oder dass die Steinplatten mittels eines Steinklebers miteinander verklebt werden.

14. Verfahren nach einem der Ansprüche 10 bis 13, **dadurch gekennzeichnet, dass** das Abdeckteil aus einer Holz- oder Kunststoffplatte besteht, und/oder, dass der Körper mit einer größeren Dicke vorgesehen wird als eine Steinplatte und/oder, dass als Steinplatte eine Natursteinplatte verwendet wird.

15. Verfahren nach einem der Ansprüche 10 bis 14, **dadurch gekennzeichnet, dass** entlang einem Innen-Eckbereich, vorzugsweise entlang einem oder beiden Innen-Längseckbereichen des Steinkörpers, ein Metallteil, beispielsweise ausgebildet als Metallwinkel oder Metall-Hohlprofil, eingeklebt wird und dass, bevorzugt, der Körper im Bereich des Metallprofils mittels einem aufschäumenden Kleber mit dem Metallprofil verklebt wird.

## Claims

1. Step or stone body comprising a surface, a step surface (9) in the case of a step, and two or more end faces adjacent thereto, a body (10), a step body (10) in the case of a step, being covered on the outside by a stone body (8) consisting of stone slab parts and glued, **characterised in that** the stone body (8) is formed as a shell-like stone body (8) that is formed to be open on one side, **in that** an underside of the body (10) or step body (10) is accessible to be fastened using screws, **in that** the underside of the body (10) or step body (10) is covered by a cover part (12) which can be drilled through in a simple manner, **in that** the cover part (12) is provided to be so large that it projects as far as to overlap a downwardly pointing end face of the shell-like stone body (8) and **in that** the inner sides of the stone slab parts are coated with a woven fabric.

2. Step or stone body according to claim 1, **characterised in that** the cover part (12) is formed as a thin wood or plastics sheet.

3. Step or stone body according to either claim 1 or claim 2, **characterised in that** the body (10) or step body (10) is glued to the shell-like stone body (8) by means of a foaming two-component adhesive.

4. Step or stone body according to claim 1, **characterised in that** the body (10) or step body (10) is cuboid and/or **in that** the slab parts (13, 14, 15, 16, 17) are glued together by means of a stone adhesive.

5. Step or stone body according to any of the preceding claims, **characterised in that** the body (10) or step body (10) is glued to the shell-like stone body (8) with a metal part placed therebetween, for example a metal bracket or a metal hollow profile part.

6. Step or stone body according to claim 5, **characterised in that** the gluing takes place along the inner side of a corner formation of the shell-like stone body.

7. Step or stone body according to either claim 5 or claim 6, **characterised in that** the metal part extends along a longitudinal corner region.

8. Step or stone body according to any of claims 5 to 7, **characterised in that** the metal part is glued to the shell-like stone body (8) by means of a preferably non-foaming, in particular one-component adhesive.

9. Stone body according to any of the preceding claims, **characterised in that** the stone body is formed as a part of a piece of furniture, in particular a part of a door of a piece of furniture, preferably a part of a cupboard door.

10. Method for producing a step which can be fastened using screws or a stone body which can be fastened using screws, said step or stone body comprising a body (10), a step body (10) in the case of a step, and an outer surface (9), a step surface (9) in the case of a step, and two or more end faces adjacent thereto, the outside of the body (10), the step body (10) in the case of a step, being covered by a stone body (8) consisting of stone slab parts, **characterised in that** the inner sides of the stone slab parts are coated with a woven fabric, **in that**, in order to form the outer surface (9) or the step surface (9), a stone body (8) is formed which is open on one side and comprises a shell edge, **in that** a body (10) which can be connected using screws, a step body (10) which can be connected using screws in the case of a step, is formed having a cover part (12) which projects beyond the edge thereof and can be drilled through in a simple manner and **in that** the body (10), the step body (10) in the case of a step, is placed into the shell-like stone body (8), with an adhesive layer placed therebetween, such that the cover part (12) comes to rest on the shell edge.

11. Method according to claim 10, **characterised in that** the shell-like stone body (8) and the inserted body (10), the inserted step body (10) in the case of a step, are pressed against one another until the adhesive layer cures.

12. Method according to either claim 10 or claim 11, **characterised in that** a projecting edge of the cover part (12) is removed once the stone body has been joined to the body (10) or step body (10).

13. Method according to any of claims 10 to 12, **characterised in that** the stone slab parts are adhesively bonded together in order to form the shell-like stone body (8), the box walls being formed to be closed around the periphery forming a box that is open on one side, and, in an also preferable manner, the adhesive layer being formed by a two-component adhesive, and/or **in that** the stone slabs are glued together by means of a stone adhesive.

14. Method according to any of claims 10 to 13, **characterised in that** the cover part consists of a wood or plastics sheet, and/or **in that** the body is provided with a greater thickness than a stone slab and/or **in that** a natural stone slab is used as a stone slab.

15. Method according to any of claims 10 to 14, **characterised in that** a metal part, for example formed as a metal bracket or a metal hollow profile, is glued in place along one inner corner region, preferably along one or both inner longitudinal corner regions of the stone body and **in that** the body is preferably glued to the metal profile in the region of the metal profile by means of a foaming adhesive.

## Revendications

1. Marche d'escalier ou corps en pierre comportant une surface, une surface de marche (9) dans le cas d'une marche d'escalier, et deux ou plusieurs surfaces frontales adjacentes à ladite surface, un corps (10), un corps de marche (10) dans le cas d'une marche d'escalier, étant recouvert et collé extérieurement d'un corps en pierre (8) formé par des éléments de dalles en pierre, **caractérisée en ce que** le corps en pierre (8) est réalisé sous la forme d'un corps en pierre (8) en forme de coque ouverte sur un côté, **en ce qu'**une face inférieure du corps (10), respectivement du corps de marche (10), est accessible pour une fixation par vissage, **en ce que** le corps (10), respectivement le corps de marche (10), est recouvert sur la face inférieure par un élément de couverture (12) apte à être perforé de manière simple, **en ce que** ledit élément de couverture (12) est prévu avec des dimensions telles qu'il s'avance jusqu'à recouvrir une face frontale dirigée vers le bas du corps en pierre (8) en forme de coque, et **en ce que** les éléments de dalles en pierre sont revêtus d'un textile sur la face intérieure.

2. Marche d'escalier ou corps en pierre selon la revendication 1, **caractérisée en ce que** l'élément de couverture (12) est réalisé sous la forme d'un mince panneau en bois ou en matière plastique.

3. Marche d'escalier ou corps en pierre selon la revendication 1 ou 2, **caractérisée en ce que** le corps (10) ou le corps de marche (10) est collé au corps en pierre (8) en forme de coque au moyen d'une colle effervescente à deux composants.

4. Marche d'escalier ou corps en pierre selon la revendication 1, **caractérisée en ce que** le corps (10) ou le corps de marche (10) est parallélépipédique et/ou **en ce que** les éléments de dalles en pierre (13, 14, 15, 16, 17) sont collés les uns aux autres au moyen d'une colle pour pierre.

5. Marche d'escalier ou corps en pierre selon l'une des revendications précédentes, **caractérisée en ce que** le corps (10) ou le corps de marche (10) est collé au corps en pierre (8) en forme de coque moyennant l'interposition d'un élément métallique, tel qu'une cornière métallique ou un profilé creux métallique.

6. Marche d'escalier ou corps en pierre selon la revendication 5, **caractérisée en ce que** l'assemblage collé est réalisé le long de la face intérieure d'une configuration en angle du corps en pierre en forme de coque.

7. Marche d'escalier ou corps en pierre selon la revendication 5 ou 6, **caractérisée en ce que** l'élément métallique s'étend le long d'une zone d'angle longitudinale.

8. Marche d'escalier ou corps en pierre selon l'une des revendications 5 à 7, **caractérisée en ce que** l'élément métallique est collé au corps en pierre (8) en forme de coque au moyen d'une colle, de préférence non effervescente, en particulier à un seul composant.

9. Corps en pierre selon l'une des revendications précédentes, **caractérisé en ce que** le corps en pierre est réalisé sous la forme d'un élément de meuble, en particulier une porte de meuble, de préférence une porte d'armoire.

10. Procédé pour la réalisation d'une marche d'escalier apte à être fixée par vissage ou d'un corps en pierre apte à être fixé par vissage, comportant un corps (10), un corps de marche (10) dans le cas d'une marche d'escalier, et une surface extérieure (9), une surface de marche (9) dans le cas d'une marche d'escalier, et deux ou plusieurs surfaces frontales adjacentes à ladite surface, le corps (10), le corps de marche (10) dans le cas d'une marche d'escalier, étant recouvert extérieurement par un corps en pierre (8) formé par des éléments de dalles en pierre, **caractérisé en ce que** les éléments de dalles en pierre sont revêtues d'un textile sur la face intérieure, **en ce qu'**un corps en pierre (8), ouvert sur un côté et muni d'un bord de coque, est réalisé pour former la surface extérieure (9), respectivement la surface de marche (9), **en ce qu'**un corps (10) apte à être fixé par vissage, dans le cas d'une marche d'escalier, un corps de marche (10) apte à être fixé par vissage, est réalisé avec un élément de couverture (12), en saillie sur le bord et apte à être perforé de manière simple, et **en ce que** le corps (10), le corps de marche (10) dans le cas d'une marche d'escalier, est inséré, moyennant l'interposition d'une couche de colle, dans le corps en pierre (8) en forme de coque, de telle sorte que l'élément de couverture (12) vient en appui sur le bord de la coque.

11. Procédé selon la revendication 10, **caractérisé en ce que** le corps en pierre (8) en forme de coque et le corps (10) inséré, le corps de marche (10) inséré dans le cas d'une marche d'escalier, sont pressés l'un contre l'autre jusqu'au durcissement de la couche de colle.

12. Procédé selon la revendication 10 ou 11, **caractérisé en ce qu'**après l'assemblage du corps en pierre avec le corps (10) ou le corps de marche (10), un bord saillant de l'élément de couverture (12) est enlevé.

13. Procédé selon l'une des revendications 10 à 12, **caractérisé en ce que** les éléments de dalles en pierre sont assemblés les uns aux autres pour la formation d'un corps en pierre (8) en forme de coque, dans lequel, moyennant la formation d'un caisson ouvert sur un côté, les parois du caisson sont fermés sur la périphérie, et, en outre de préférence, la couche de colle est formée par une colle à deux composants, et/ou **en ce que** les éléments de dalles en pierre sont collés les uns aux autres au moyen d'une colle pour pierre.

14. Procédé selon l'une des revendications 10 à 13, **caractérisé en ce que** l'élément de couverture est formé par un panneau en bois ou en matière plastique, et/ou **en ce que** le corps est prévu avec une épaisseur supérieure à une dalle en pierre et/ou **en ce que** la dalle en pierre utilisée est une dalle en pierre naturelle.

15. Procédé selon l'une des revendications 10 à 14, **caractérisé en ce qu'**un élément métallique, réalisé par exemple sous la forme d'une cornière métallique ou d'un profilé creux métallique, est collé le long d'une zone d'angle intérieure, de préférence le long d'une ou des deux zones d'angle longitudinales intérieures du corps en pierre, et **en ce que**, de préférence, dans la zone du profilé métallique, le corps est collé au profilé métallique au moyen d'une colle effervescente.
